# EUROPÄISCHE PATENTANMELDUNG

(11) **EP 1 270 960 A2**
(43) Veröffentlichungstag der Anmeldung: **02.01.2003**
(21) Anmeldenummer: 02012415.2
(22) Anmeldetag: 07.06.2002
(51) Int. Cl.: F15B 15/19, B60P 7/06, B60R 21/02, B60R 21/08, B60R 21/20, B60R 21/34, B60R 22/195

(54) **Betätigungsvorrichtung für eine Sicherheitseinrichtung**

(30) Priorität: 18.06.2001 DE 20110046 U; 28.09.2001 DE 10147970
(71) Anmelder: TRW Occupant Restraint Systems GmbH & Co. KG, 73553 Alfdorf (DE)
(72) Erfinder: Birk, Karl, 73061 Ebersbach (DE); Class, Uwe, 73579 Schechingen (DE); Dannenhauer, Reiner, 73642 Welzheim (DE); Lüders, Michael, 73579 Schechingen (DE); Miodek, Thomas, 73557 Mutlangen (DE); Hasbach, Thomas, 50678 K-ln (DE)
(74) Vertreter: Sties, Jochen, Dipl.-Ing.

(57) **Zusammenfassung**

Eine Betätigungsvorrichtung (414) für eine Sicherheitseinrichtung (410) in einem Fahrzeug ist dadurch gekennzeichnet, daß die Betätigungsvorrichtung einen pneumatischen Muskel (430) als Antrieb und einen pyrotechnischen Gasgenerator (434) zur Speisung des pneumatischen Muskels aufweist.

## Beschreibung

Die Erfindung betrifft eine Betätigungsvorrichtung für eine Sicherheitseinrichtung in einem Fahrzeug und eine Baugruppe bestehend aus einer Sicherheitseinrichtung und einer derartigen Betätigungsvorrichtung.

Derartige Betätigungsvorrichtungen sind bisher in der Regel als druckgasbetriebene Kolben-Zylinder-Einheiten oder elektrische Antriebe ausgeführt. Kolben-Zylinder-Antriebe sind unflexibel und meist sperrig, da sie einen geradlinigen Laufweg für den Kolben aufweisen müssen. Eine wichtige Vorraussetzung zum Einsatz für eine Sicherheitseinrichtung ist die Reaktionszeit, d.h. wie schnell kann die Betätigungsvorrichtung die Schutzeinrichtung soweit aktivieren, daß die Schutzwirkung eintritt. Dem steht die Massenträgheit bewegter Teile entgegen. Oft wird versucht, dieses Hindernis durch Überdimensionierung des Antriebs auszugleichen, wodurch der Platzbedarf und das Gewicht der Betätigungsvorrichtung erhöht sind.

Die Erfindung schafft eine Betätigungsvorrichtung mit geringem Platzbedarf, die flexibel im Fahrzeug untergebracht werden kann und eine sehr kurze Reaktionszeit aufweist.

Diese Aufgabe wird gelöst durch eine Betätigungsvorrichtung der eingangs genannten Art, die einen pneumatischen Muskel als Antrieb und einen pyrotechnischen Gasgenerator zur Speisung des pneumatischen Muskels aufweist. Unter einem pneumatischen Muskel wird hier eine fluidbetriebene Betätigungsvorrichtung verstanden, wie sie beispielsweise in der DE 195 31 097 A1 beschrieben ist. Der pneumatische Muskel besteht aus einem Schlauchkörper, der von einer Hülle mit einer netzartigen Struktur umgeben ist. Wenn der Schlauchkörper mit Druck beaufschlagt wird, dies eine radiale Aufweitung zur Folge, die aufgrund der Netzstruktur der Hülle zu einer Längenkontrakrion des Muskels führt. Eine Betätigungsvorrichtung mit einem derartigen pneumatischen Muskel kann im Auslösefall sehr schnell reagieren, weil im Gegensatz zu einem Kolben-Zylinder-Antrieb keine Kolbenmasse beschleunigt werden muß. Da der pyrotechnische Gasgenerator in Sekundenbruchteilen eine ausreichende Gasmenge mit dem erforderlichen Druck entwickeln kann, kann die Sicherheitseinrichtung durch die Betätigungsvorrichtung sehr schnell aktiviert werden, so daß bei einem Unfall die Schutzwirkung rechtzeitig und wirksam entfaltet werden kann. Außerdem ist der pneumatische Muskel flexibel, so daß die Betätigungsvorrichtung im Fahrzeug bei der Montage gebogen werden kann und somit auch an schwer zugänglichen Stellen angebracht und auch gekrümmt verlegt werden kann.

Weitere vorteilhafte Ausgestaltungen der Erfindung ergeben sich aus den Unteransprüchen.

Die Erfindung wird nachfolgend anhand bevorzugter Ausführungsformen ausführlich beschrieben. Dabei wird Bezug genommen auf die beigefügten Zeichnungen, in welchen zeigt:
- Figur 1a bis 1e einen schematischen Querschnitt durch eine erste Ausführungsform einer erfindungsgemäßen Baugruppe in jeweils aufeinanderfolgenden Phasen eines Aktivierungsvorganges;
- Figur 2 einen schematischen Querschnitt durch ein Fahrzeug mit einer Baugruppe gemäß einer zweiten Ausführungsform der Erfindung im nicht aktivierten Zustand der Baugruppe;
- Figur 3 einen schematischen Querschnitt durch das Fahrzeug aus Figur 2 im aktivierten Zustand der Baugruppe;
- Figur 4 einen schematischen Querschnitt durch ein Fahrzeug mit einer Baugruppe gemäß einer dritten Ausführungsform der Erfindung im nicht aktivierten Zustand der Baugruppe;
- Figur 5 einen schematischen Querschnitt durch das Fahrzeug aus Figur 4 im aktivierten Zustand der Baugruppe;
- Figur 6 einen schematischen Querschnitt durch eine Baugruppe gemäß einer dritten Ausführungsform der Erfindung im nicht aktivierten Zustand der Baugruppe;
- Figur 7 einen schematischen Querschnitt durch die Baugruppe aus Figur 6 im aktivierten Zustand der Baugruppe;
- Figur 8 einen schematischen Querschnitt durch eine Baugruppe gemäß einer vierten Ausführungsform der Erfindung im nicht aktivierten Zustand der Baugruppe;
- Figur 9 einen schematischen Querschnitt durch die Baugruppe aus Figur 8 im aktivierten Zustand der Baugruppe;
- Figur 10 einen schematischen Querschnitt durch eine Baugruppe gemäß einer fünften Ausführungsform der Erfindung im nicht aktivierten Zustand der Baugruppe;
- Figur 11 einen schematischen Querschnitt durch die Baugruppe aus Figur 10 im aktivierten Zustand der Baugruppe;
- Figur 12 einen schematischen Querschnitt durch eine Baugruppe gemäß einer sechsten Ausführungsform der Erfindung im nicht aktivierten Zustand der Baugruppe;
- Figur 13 einen schematischen Querschnitt durch die Baugruppe aus Figur 12 im aktivierten Zustand der Baugruppe;
- Figur 14 in einer schematischen Ansicht ein Fahrzeug mit einer Baugruppe gemäß einer siebten Ausführungsform im aktivierten Zustand;
- Figur 15 in einer schematischen Ansicht die Baugruppe gemäß der siebten Ausführungsform im nicht aktivierten Zustand;
- Figur 16 die Baugruppe von Figur 15 im aktivierten Zustand;
- Figur 17 in einer schematischen Draufsicht ein Detail des bei der siebten Ausführungsform verwendeten pneumatischen Muskels;
- Figur 18 in einer schematischen Ansicht eine Variante zur siebten Ausführungsform;
- Figur 19 in einer schematischen Ansicht eine Baugruppe gemäß einer achten Ausführungsform in nicht aktiviertem Zustand;
- Figur 20 die Baugruppe von Figur 19 im aktivierten Zustand;
- Figur 21 in einer schematischen Vorderansicht ein Fahrzeugsitz mit einer Baugruppe gemäß einer neunten Ausführungsform der Erfindung im nicht aktivierten Zustand;
- Figur 22 den Fahrzeugsitz von Figur 21 in einer schematischen Seitenansicht; und
- Figur 23 den Fahrzeugsitz von Figur 21 in einer Unteransicht.

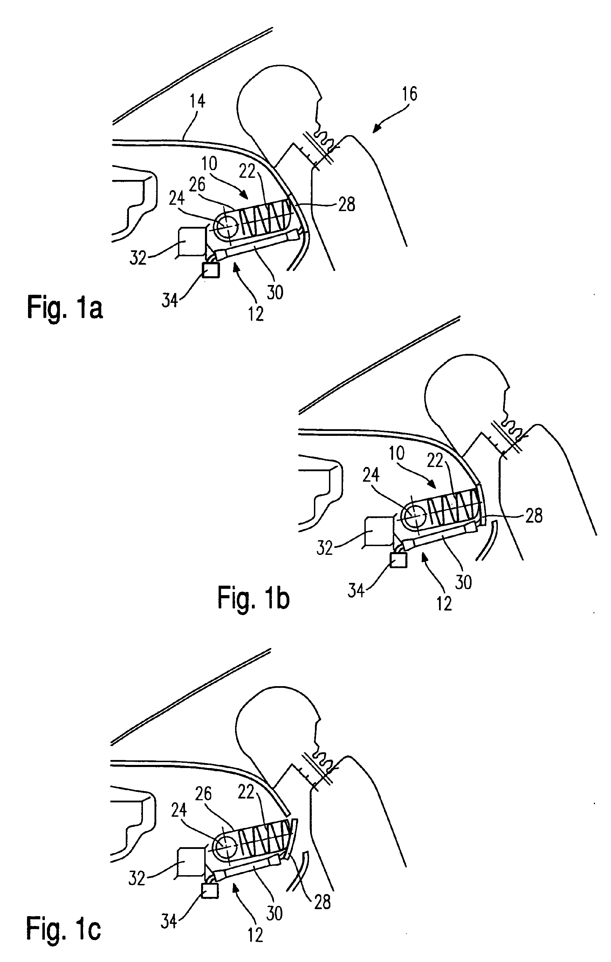

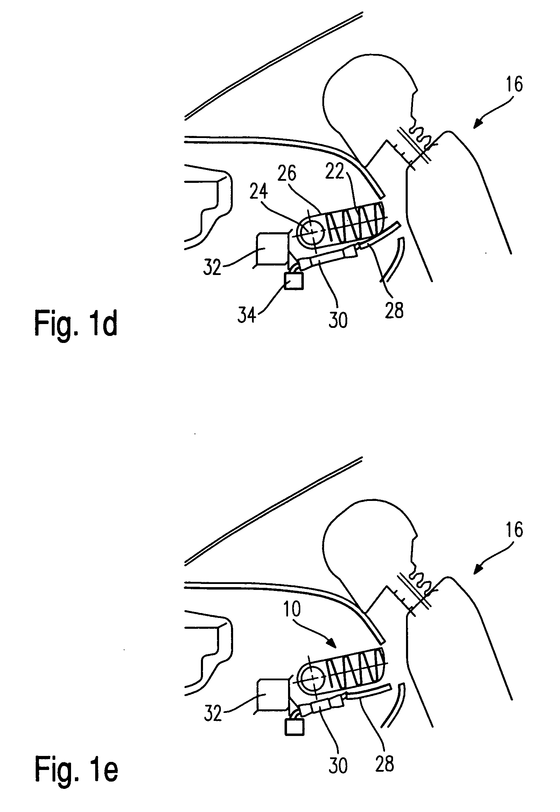

In den Figuren 1a bis 1e ist eine erfindungsgemäße Baugruppe mit einer Sicherheitseinrichtung 10 und einer Betätigungsvorrichtung 12 in aufeinanderfolgenden Phasen der Aktivierung der Sicherheitseinrichtung 10 zu sehen. Die Baugruppe ist in einer Instrumententafel 14 eines Fahrzeuges eingebaut. In den Figuren sind schematisch die Konturen des Oberkörpers eines Fahrzeuginsassen 16 dargestellt, der zur Instrumententafel 14 hin vornübergebeugt ist. Die Sicherheitseinrichtung 10 besteht in der dargestellten Ausführungsform aus einem Gassackmodul mit einem gefalteten Gassack 22 und einem Hauptgasgenerator 24, die in einem Gehäuse 26 untergebracht sind. Das Gehäuse 26 hat eine Öffnung, die zum Fahrzeuginsassen 16 weist und durch eine Abdeckklappe 28 verschlossen ist. Dabei kann die Abdeckklappe 28 in verschiedener Weise ausgeführt sein, beispielsweise wie in den Abbildungen in der Instrumententafel 14 integriert, als separate Abdeckung an der Instrumententafel montiert oder als Bestandteil des Gehäuses 26.

Die Betätigungsvorrichtung 12 weist einen pneumatischen Muskel 30 auf, der mit einem Ende an der Abdeckklappe 28 und mit dem anderen Ende beispielsweise an einem Rahmenträger 32 des Fahrzeugs oder am Gehäuse 26 des Gassackmoduls befestigt sein kann. Ein Sekundärgasgenerator 34 ist vorteilhafterweise in der Nähe des pneumatischen Muskels 30 angeordnet und steht mit diesem in Strömungsverbindung.

Zur Aktivierung der Sicherheitseinrichtung wird zunächst der Sekundärgasgenerator 34 gezündet, der in kürzester Zeit ein Gasvolumen erzeugt, welches in den pneumatischen Muskel 30 gelangt und bei diesem eine Längskontraktion bewirkt. Durch die Längskontraktion des pneumatischen Muskels 30 wird die Abdeckklappe 28 ins Innere der Instrumententafel 14 gezogen (Figuren 1b bis 1e), wobei sie die Öffnung des Gehäuses 26 freigibt.

Anschließend kann der Hauptgasgenerator 24 gezündet werden, um den Gassack 22 aufzublasen. Da die Öffnung des Gehäuses 26 nunmehr frei ist, wird zum Aufblasen des Gassackes 22 eine geringere Gasmenge benötigt als bei vergleichbaren Gassackmodulen, bei denen eine Abdeckklappe durch den Druck des sich entfaltenden Gassackes erst geöffnet werden muß. Dadurch kann der Hauptgasgenerator 24 wesentlich kleiner und leichter ausgeführt werden.

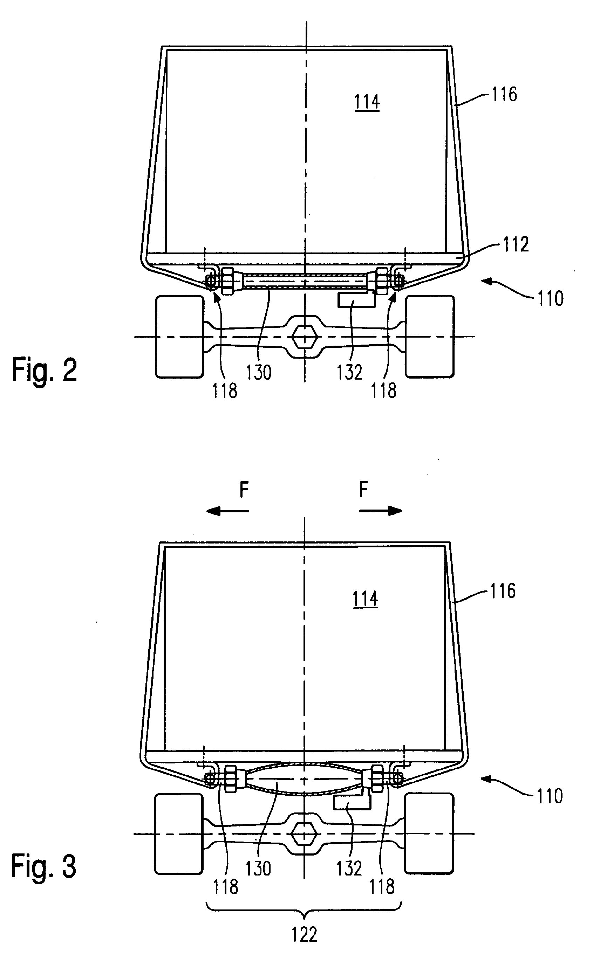

Eine zweite Ausführungsform der erfindungsgemäßen Baugruppe ist in den Figuren 2 und 3 zu sehen. Auf einem schematisch dargestellten Lastfahrzeug 110 mit einer Ladefläche 112 befindet sich eine Ladung 114, die mit einem Spanngurt 116 gesichert ist. Die beiden Enden des Spanngurtes 116 sind auf der Unterseite der Ladefläche 112 an derselben befestigt und jeweils durch eine von zwei Ösen 118 einer Spannvorrichtung geführt. Die beiden Ösen 118 sind zum Spannen des Spanngurtes 116 parallel zur Ebene der Ladefläche 112 verschiebbar. Die Spannvorrichtung kann von einer Betätigungsvorrichtung 122 aus einem pneumatischen Muskel 130 und einem pyrotechnischen Gasgenerator 132 betätigt werden. Zu diesem Zweck sind die Enden des pneumatischen Muskels 130 jeweils mit einer der Ösen 118 verbunden. Zur Auslösung der Spannvorrichtung wird der pneumatische Muskel 130 mit Druck beaufschlagt, so daß er sich in bekannter Weise zusammenzieht und dabei die Ösen 118 zueinander hin verschiebt, so daß der Spanngurt 116 gespannt wird.

Eine zusätzliche mechanische Sperre kann verhindern, daß sich die Spannvorrichtung nach dem Druckabbau im pneumatischen Muskel 130 wieder löst.

Die Spannvorrichtung kann beispielsweise durch einen Sensor bei Unfällen oder Notbremsungen ausgelöst werden. So kann verhindert werden, daß die Ladung 114 auf der Ladefläche 112 verrutscht.

Es kann aber auch vorgesehen sein, die Spannvorrichtung automatisch oder durch manuelles Auslösen nach Beenden des Ladevorgangs zu betätigen. Dies hat den Vorteil, daß beim manuellen Sichern der Ladung weniger Kraft aufgewendet werden muß. Wird der im pneumatischen Muskel beim Spannvorgang anstehende Druck gemessen, so kann der gemessene Druckwert als Kriterium verwendet werden, ob die Ladung ausreichend gesichert ist.

Als Druckquelle für den pneumatischen Muskel kann im Regelfall auch ein eventuell vorhandener Preßlufterzeuger des Fahrzeuges benutzt werden, während der Gasgenerator 132 nur bei Unfällen oder Notbremsungen gezündet wird.

Die beschriebene Sicherheitseinrichtung eignet sich zum Beispiel für Lastkraftfahrzeuge und Anhänger, aber auch für Eisenbahnfahrzeuge.

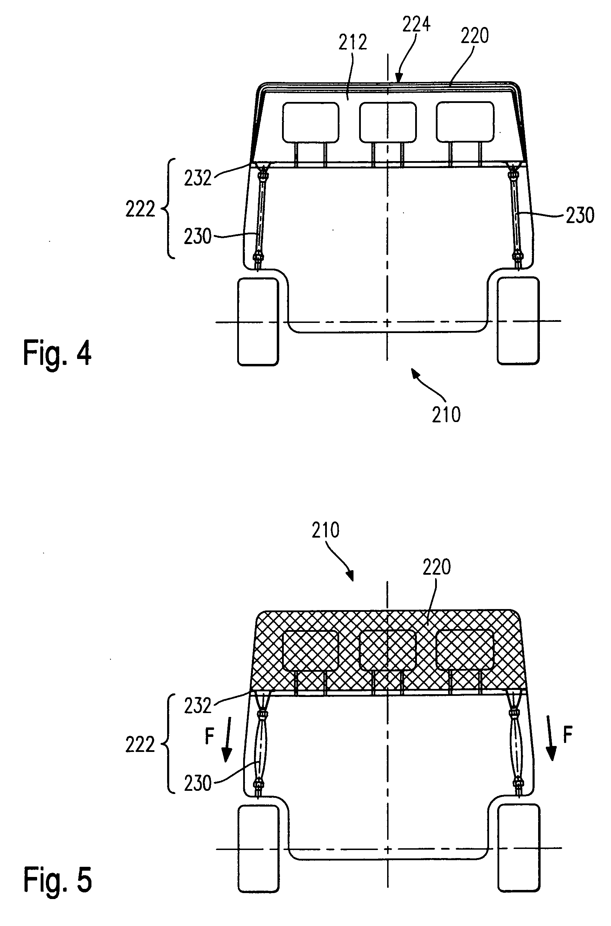

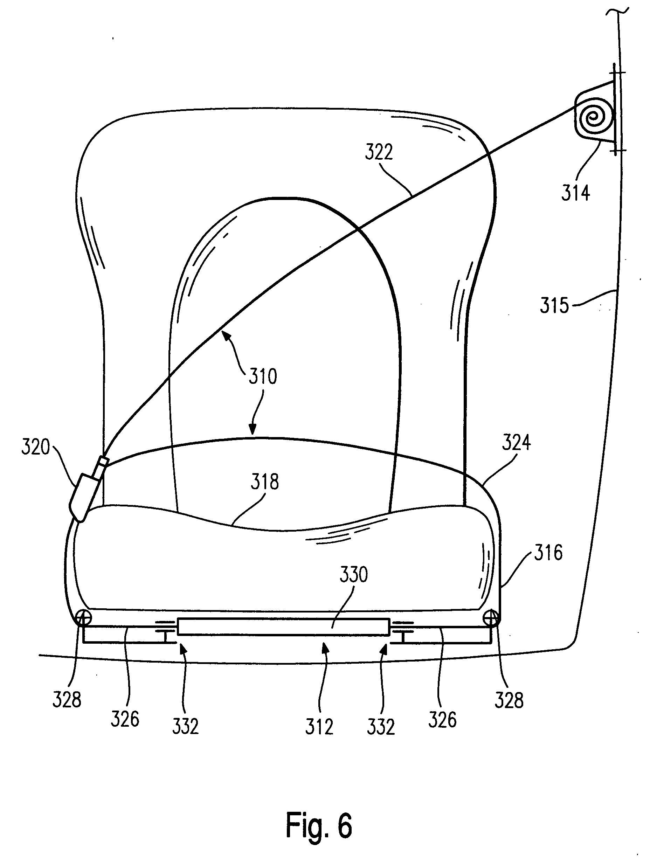

Eine weitere Ausführungsform einer erfindungsgemäßen Baugruppe ist in den Figuren 4 und 5 zu sehen. In einem schematisch dargestellten Fahrzeug 210, beispielsweise einem Kombifahrzeug mit einer Ladefläche hinter den Sitzen, ist zwischen einem Fahrgastraum 212, der in den Figuren durch die angedeuteten Kopfstützen veranschaulicht ist, und der Ladefläche ein Haltenetz 220 angeordnet, das im nichtbenutzten Zustand am Fahrzeugdach 224, beispielsweise unter dem Dachhimmel versteckt untergebracht ist. Das Haltenetz 220 ist mit einer Betätigungsvorrichtung 222 verbunden, die aus zwei pneumatischen Muskeln 230 besteht, welche aus einem gemeinsamen oder jeweils aus separaten Gasgeneratoren (nicht dargestellt) gespeist werden. Jeder der pneumatischen Muskeln 230 ist mit einem Ende an der Fahrzeugkarosserie befestigt. Mit dem jeweils anderen Ende können die pneumatischen Muskeln 230 über eine Zugvorrichtung, beispielsweise ein Zugseil 232, eine Zugkraft auf das Haltenetz 220 ausüben. Bei der Auslösung der Betätigungsvorrichtung 222 erfahren die pneumatischen Muskeln 230 durch Druckgas vom Gasgenerator eine Längskontraktion (Figur 5). Infolgedessen wird das Haltenetz 220 durch die Zugseile 232 aus seinem unbenutzten Zustand heraus vom Fahrzeugdach heruntergezogen und aufgespannt, so daß es den Laderaum vom Fahrgastraum 212 trennt und damit ein Verrutschen von Ladung aus dem Laderaum verhindert.

Als Variante kann das Haltenetz 220 bereits vor der Auslösung der Betätigungsvorrichtung zwischen Fahrgastraum 212 und Laderaum aufgespannt sein, so daß es bei der Auslösung der Betätigungsvorrichtung 222 gestrafft wird, um die Schutzwirkung gegen verrutschende Ladung zu erhöhen.

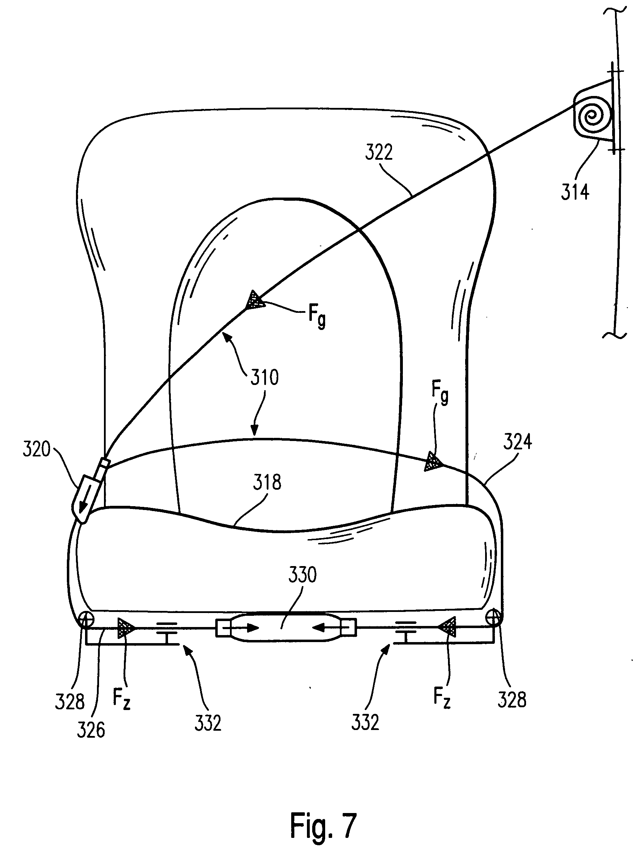

Eine weitere, in den Figuren 6 und 7 gezeigte Ausführungsform der Erfindung betrifft eine Baugruppe mit einem Sicherheitsgurt 310 und einer Betätigungsvorrichtung 312 zum Straffen des Sicherheitsgurtes 310. Der Sicherheitsgurt 310 ist ein sogenannter Dreipunktgurt, das heißt, er ist im angelegten Zustand an drei Befestigungspunkten im Fahrzeug befestigt, nämlich über einen Gurtaufroller 314, beispielsweise an der B-Säule 315 des Fahrzeugrahmens, über einen Endbeschlag 316 auf einer Seite eines Fahrzeugsitzes 318 und mittels eines Gurtschlosses 320 auf der gegenüberliegenden Seite des Fahrzeugsitzes 318. Durch den Befestigungspunkt am Gurtschloß 320 ist der Sicherheitsgurt 310 in einen Schultergurtabschnitt 322 und einen Beckengurtabschnitt 324 geteilt. Der Endbeschlag 316 und das Gurtschloß 320 sind jeweils durch ein Zugmittel, beispielsweise ein Drahtseil 326 oder ein Gurtband, das über Umlenkrollen 328 geführt ist, mit einer Betätigungsvorrichtung 312 zum Straffen des Sicherheitsgurtes verbunden. Anstelle des Endbeschlages 316 kann auch vorgesehen sein, das Ende des Sicherheitsgurtes 310 über die Umlenkrolle 328 bis zur Betätigungsvorrichtung 312 zu führen. Die Betätigungsvorrichtung 312 besteht aus einem pneumatische Muskel 330, der von einem pyrotechnischen Gasgenerator (nicht dargestellt) gespeist wird. Vorteilhafterweise ist das Zugmittel unter dem Sitz noch durch Führungen 332 stabilisiert, um ein Durchhängen oder Schwingen zu vermeiden.

Zum Ausführen eines Straffvorgangs (Figur 6) wird die Betätigungsvorrichtung 312 ausgelöst, indem der pneumatische Muskel 330 von dem Gasgenerator mit Druckgas befüllt wird. Der pneumatische Muskel 330 erfährt dadurch eine Längskontraktion und übt über das Zugmittel eine Zugkraft F_{z} sowohl auf den Endbeschlag 316 als auch auf das Gurtschloß 320 aus. Dabei stellt sich von selbst ein Ausgleich der Zugkräfte Fg im Sicherheitsgurt 310 ein, so daß sowohl aus dem Beckengurtabschnitt 324 als auch aus dem Schultergurtabschnitt 322 des Sicherheitsgurtes 310 eine eventuell vorhandene Gurtlose gleichmäßig entfernt wird.

Alternativ können auch der Aufroller 314 und der Endbeschlag 316 über Zugmittel mit einer Betätigungsvorrichtung verbunden sein, insbesondere dann, wenn diese beiden Befestigungspunkte räumlich nahe beieinander angeordnet sind.

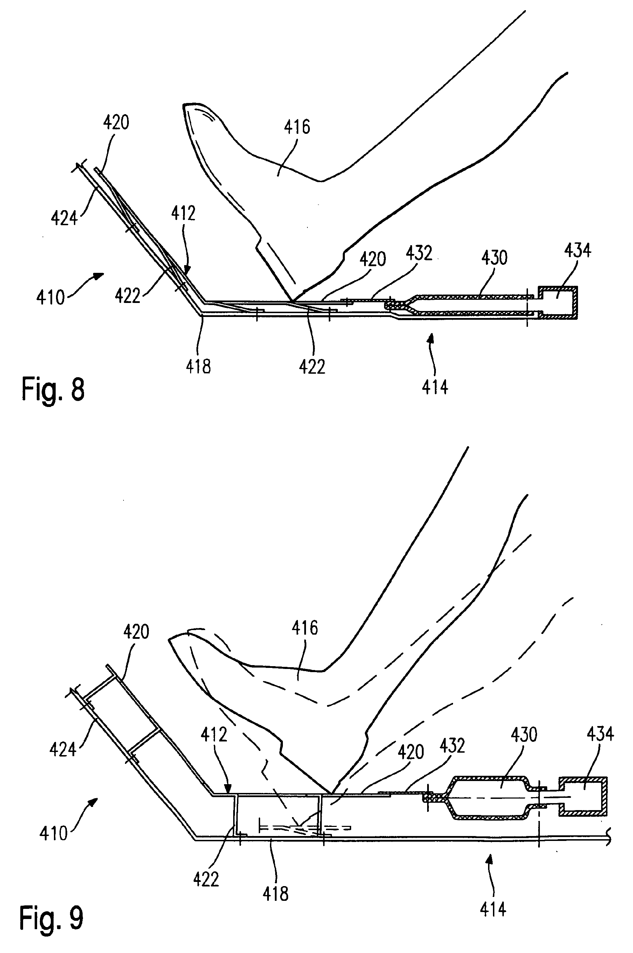

Eine wiederum weitere Ausführungsform der Erfindung ist in den Figuren 8 und 9 in Form einer Baugruppe mit einer Fußschutzvorrichtung 410 als Sicherheitseinrichtung gezeigt. Die Fußschutzvorrichtung 410 ist im Fußraum eines Fahrzeugs angeordnet und umfaßt eine Fußablage 412, die mit einer Betätigungsvorrichtung 414 gekoppelt ist. Zur Verdeutlichung der Funktionsweise der Fußschutzvorrichtung 410 ist schematisch der Fuß 416 eines Fahrzeuginsassen dargestellt. Die Fußablage 412 besteht aus einem doppelten Fahrzeugboden mit einem starren äußeren Bodenteil 418 und einem verlagerbaren inneren Bodenteil 420, die durch Verbindungshebel 422 miteinander verbunden sind. Das äußere Bodenteil 418 ist an seinem in Fahrtrichtung vorne liegenden Ende nach oben abgewinkelt und geht in eine Spritzschutzwand 424 über. Das innere Bodenteil liegt auf der zum Fuß 416 weisenden Seite des äußeren Bodenteils 418 auf. Die Verbindungshebel 422 sind in der gezeigten Ausführungsform als Ausstanzungen aus dem inneren Bodenteil 420 gebildet, wobei ihr freies Ende zur Betätigungsvorrichtung 414 weist und am äußeren Bodenteil 418 befestigt ist.

Die Betätigungsvorrichtung 414 weist einen pneumatischen Muskel 430 und einen Zughebel 432 auf, der ein vorderes Ende des pneumatischen Muskels 430 mit dem inneren Bodenteil 420 verbindet. Das hintere Ende des pneumatischen Muskels 430 ist am Fahrzeug befestigt, beispielsweise am Fahrzeugboden oder an einem Rahmenteil der Fahrzeugkarosserie. Der pneumatische Muskel 430 steht in Strömungsverbindung mit einem pyrotechnischen Gasgenerator 434, der den pneumatischen Muskel 430 mit Druckgas speisen kann.

Bei der Auslösung der Fußschutzvorrichtung (Figur 9) wird der pyrotechnische Gasgenerator 434 gezündet und versorgt den pneumatischen Muskel 30 mit Druckgas, wodurch dieser durch Erweiterung seines Querschnitts eine Längskontraktion erfährt. Infolge dieser Längskontraktion übt der pneumatische Muskel 430 über den Zughebel 432 eine Zugkraft auf das innere Bodenteil 420 aus, so daß dieses zur Betätigungsvorrichtung 414 hin (in den Figuren nach rechts) verlagert wird. Bei dieser Verlagerung geben die Verbindungshebel 422 die Bewegungsbahn des inneren Bodenteils 420 vor, wodurch sich das innere Bodenteil 420 gleichzeitig vom äußeren Bodenteil 418 entfernt und damit dem Fuß 416 des Fahrzeuginsassen, der auf dem inneren Bodenteil 420 aufliegen kann, einen größeren Abstand zum Fahrzeugboden verschafft. Auf diese Weise wird zwischen dem Fahrzeugboden und dem Fuß 416 eine Knautschzone geschaffen.

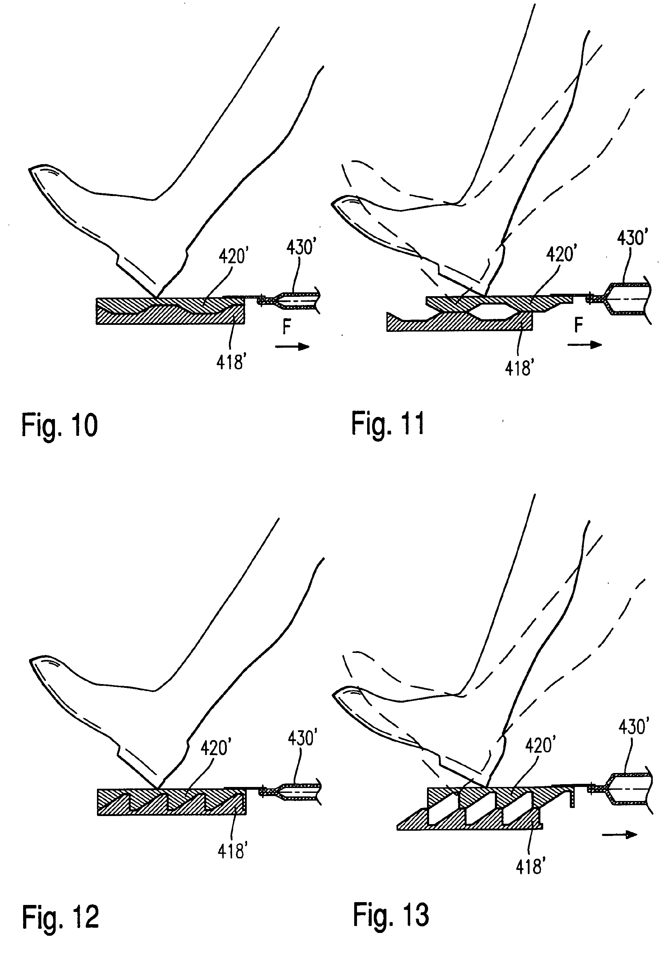

In den Figuren 10 bis 13 sind zwei weitere Varianten der erfindungsgemäßen Baugruppe mit einer Fußschutzvorrichtung gezeigt. In diesen Variante sind das innere und das äußere Bodenteil als Hartschaumplatten ausgebildet, wobei die Berührungsflächen der beiden Bodenteile jeweils eine zueinander kongruente Rippenstruktur aufweisen, so daß sich im Querschnitt ein Wellenprofil (Figuren 10 und 11) beziehungsweise ein Sägezahnprofil (Figuren 12 und 13) ergibt. Dies hat zur Folge, daß bei einer Verschiebung des Inneren Bodenteils 420' gegenüber dem äußeren Bodenteil 418' quer zur Längserstreckung der Rippen die beiden Bodenteile sich voneinander entfernen und somit die Auflagefläche für den Fuß vom Fahrzeugboden entfernt wird.

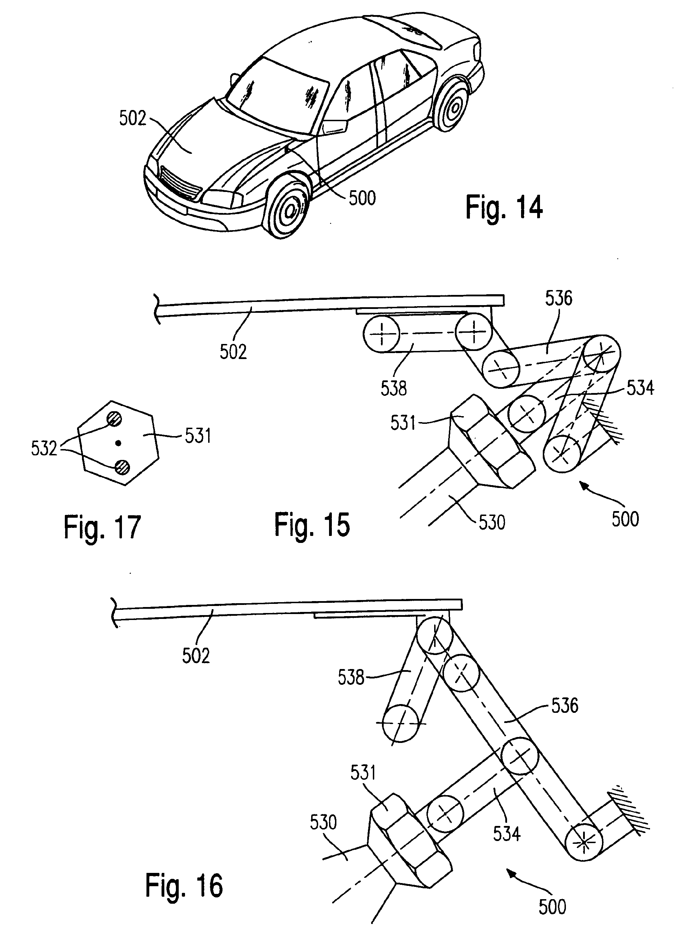

In den Figuren 14 bis 16 ist eine siebte Baugruppe einer Sicherheitseinrichtung für ein Fahrzeug gezeigt. Bei dieser Baugruppe handelt es sich um eine Betätigungsvorrichtung 500 für eine Motorhaube 502 eines in Figur 14 schematisch gezeigten Fahrzeugs. Die Betätigungsvorrichtung weist einen pneumatischen Muskel 530 auf, dessen nicht gezeigtes Ende fest am Fahrzeug angebracht und dessen anderes Ende mit einem Schlauchkopf 531 versehen ist. Im Schlauchkopf 531 sind mehrere Gasgeneratoren 532 angeordnet, die gezündet werden können, um Druckgas in das Innere des pneumatischen Muskels 530 zu leiten.

Der Schlauchkopf 531 ist über ein Zugglied 534 mit einem Kniegelenk 536 verbunden, das an einer Seite fahrzeugfest und an der anderen Seite an der Motorhaube 502 angelenkt ist. An der Motorhaube ist auch ein Abstützglied 538 vorgesehen. Wenn der pneumatische Muskel 530 sich verkürzt, wird die Motorhaube 502 durch das Kniegelenk 536 aus der in Figur 15 gezeigten Ausgangsstellung in die in Figur 16 gezeigte, aufgestellte Stellung überrührt. Auf diese Weise kann für den Fall einer Kollision mit Fußgängern oder Fahrradfahrern ein größerer Deformationsweg bereitgestellt werden. Das Aufstellen der Motorhaube kann zum Beispiel nach einer Kontaktmessung im Vorderwagenbereich erfolgen.

Das Aufstellen der Motorhaube soll reversibel sein. Nach einer Aktivierung der Betätigungsvorrichtung 500 kann die Motorhaube wieder nach unten gedrückt werden, so daß sie in ihre Ausgangsstellung gelangt. Da mehrere Gasgeneratoren 532 vorgesehen sind, von denen im Betätigungsfall jeweils nur ein einziger gezündet wird, ist die Betätigungsvorrichtung nach einer Aktivierung weiterhin funktionsbereit. Es muß lediglich bei nächster Gelegenheit der verbrauchte Gasgenerator ersetzt werden. Dies ist mit geringem Aufwand möglich, ohne den gesamten pneumatischen Muskel auszutauschen.

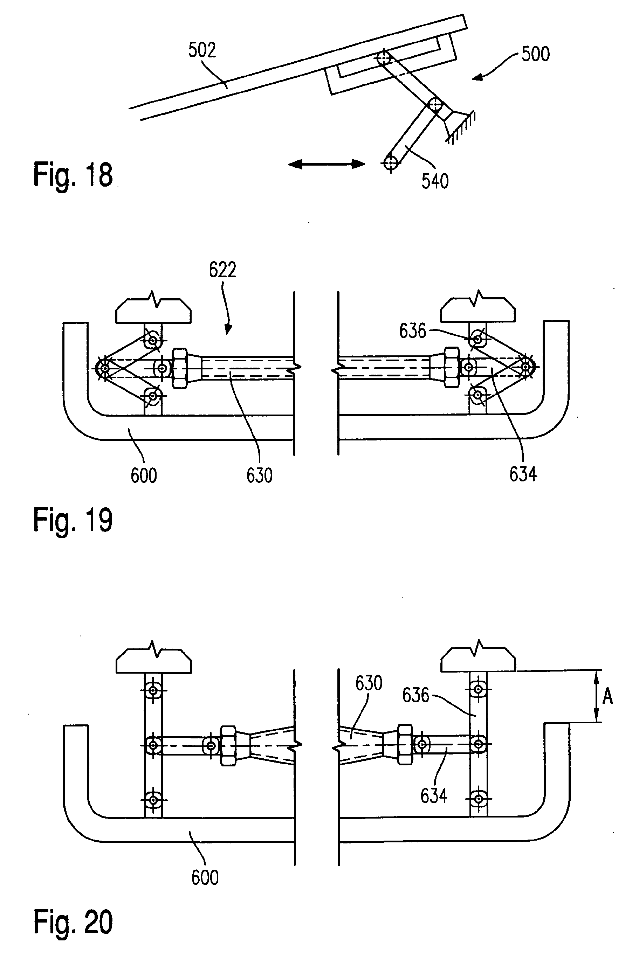

In Figur 18 ist schematisch eine alternative Ausgestaltung der Betätigungsvorrichtung 500 gezeigt, bei der ein Kniehebel 540 verwendet wird, der an einem Ende verschiebbar an der Motorhaube 502 geführt ist. Durch Verschwenken des Kniehebels 540 kann die Motorhaube 502 aus ihrer Ausgangsstellung in die aufgestellte Stellung überführt werden.

In den Figuren 19 und 20 ist eine achte Ausführungsform gezeigt. Bei dieser Ausführungsform handelt es sich um eine Stoßstange 600, die mittels einer Betätigungsvorrichtung aus der in Figur 19 gezeigten Ruhestellung in die in Figur 20 gezeigte, aktivierte Stellung überführt werden kann, in der sie gegenüber der Ruhestellung um eine Strecke A ausgefahren ist. Zur Verstellung der Stoßstange 600 wird eine Betätigungsvorrichtung 622 verwendet, die einen pneumatischen Muskel 630 sowie zwei Kniegelenke 636 verwendet, wie sie aus Figur 15 bekannt sind. Jedes Kniegelenk ist an einem Ende fest am Fahrzeug und am anderen Ende mit der Stoßstange 600 verbunden, wobei in der Mitte ein Zugglied 634 angreift, das mit dem pneumatischen Muskel 630 verbunden ist.

Durch Aktivierung des pneumatischen Muskels 630 wird der Abstand zwischen den beiden einander gegenüberliegenden Kniegelenken 636 so verkürzt, daß die Stoßstange in die in Figur 20 gezeigte Stellung überführt wird. Dies ermöglicht einen frühzeitigen Kontakt mit einem Unfallgegner. Die Betätigungsvorrichtung kann dabei so ausgeführt sein, daß diese einen möglichst großen Anteil der Crash-Energie durch Deformation aufnehmen kann. Dies reduziert die Beschädigung an den anderen tragenden Teilen des Fahrzeugs und führt gleichzeitig zu einer Reduktion des Fahrzeugimpulses. Kommt es nur zu einer kleinen Kollision, z.B. dem Kontakt mit einem Pfosten oder mit einem Fahrzeug bei geringer Geschwindigkeit, so kann die Vorrichtung so ausgeführt sein, daß die energieaufnehmenden Teile der Vorrichtung einfach zu ersetzen sind. Dies reduziert die Reparaturkosten. Weiter kann der pneumatische Muskel so ausgelegt werden, daß er sich nach einem geringfügigen Unfall automatisch durch die Abkühlung der vom Gasgenerator bereitgestellten Treibgase wieder in die Ausgangsstellung zurückzieht. Alternativ kann die Betätigungsvorrichtung so ausgeführt sein, daß die Stoßstange vom Fahrer wieder in die Ausgangsstellung zurückgedrückt werden kann.

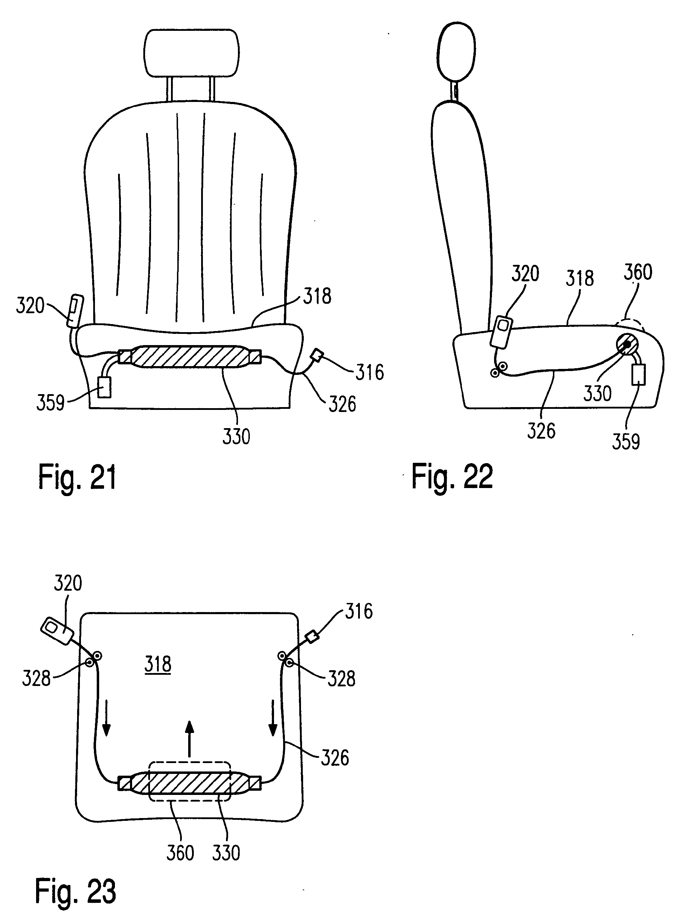

In den Figuren 21 bis 23 ist eine Betätigungseinrichtung gemäß einer neunten Ausführungsform gezeigt, die auf der in den Figuren 6 und 7 gezeigten dritten Ausführungsform aufbaut. Für die von der dritten Ausführungsform bekannten Bauteile werden dieselben Bezugszeichen verwendet, und es wird insoweit auf die obigen Erläuterungen verwiesen.

Auch bei der neunten Ausführungsform wird der pneumatische Muskel 330 zur Straffung sowohl des Endbeschlages 316 als auch des Gurtschlosses 320 verwendet. Zur Aktivierung ist ein Gasgenerator 359 vorgesehen, der von einer (nicht dargestellten) Auslöseschaltung bei Bedarf aktiviert wird.

Im Unterschied zur dritten Ausführungsform ist der pneumatische Muskel aber nicht unterhalb des Fahrzeugsitzes angeordnet, sondern in seinem Inneren. Auch ist der pneumatische Muskel 330 nicht im Bereich des Übergangs zur Sitzlehne 321 angeordnet, wie es zur kürzesten Verbindung mit dem Gurtschloß und dem Endbeschlag zweckmäßig ist, sondern in der Nähe des vorderen Randes der Sitzfläche in der Nähe der oberen Seite. Auf diese Weise kann mittels des pneumatischen Muskels 330, wenn dieser aktiviert ist und sich in seinem aufgeblasenen Zustand befindet, ein Wulst 360 auf der Oberseite der Sitzfläche erzeugt werden. Dieser vom aufgeblasenen pneumatischen Muskel gebildete Wulst dient als Anti-Submarining-Mittel. Wenn zusätzlich ein System zur kontrollierten Entlüftung des pneumatischen Muskels vorgesehen ist, kann eine Gurtband-Kraftbegrenzungsfunktion für den Bereich Becken/unterer Oberkörper verwirklicht werden.

## Patentansprüche

1. Betätigungsvorrichtung (12; 222; 312; 414; 500; 622) für eine Sicherheitseinrichtung (10) in einem Fahrzeug, **dadurch gekennzeichnet, daß** die Betätigungsvorrichtung einen pneumatischen Muskel (30; 130; 230; 330; 430; 530; 630) als Antrieb und einen pyrotechnischen Gasgenerator (34; 132; 434; 534) zur Speisung des pneumatischen Muskels aufweist.

2. Baugruppe bestehend aus einer Sicherheitseinrichtung und einer Betätigungsvorrichtung nach Anspruch 1, **dadurch gekennzeichnet, daß** die Sicherheitseinrichtung ein Fahrzeuginsassen-Rückhaltesystem aufweist mit einem Gehäuse (26) und einer Abdeckklappe (28), die von der Betätigungsvorrichtung (12) geöffnet werden kann.

3. Baugruppe bestehend aus einer Sicherheitseinrichtung und einer Betätigungsvorrichtung nach Anspruch 1, **dadurch gekennzeichnet, daß** die Sicherheitseinrichtung einen Spanngurt (116) zur Befestigung einer Ladung (114) auf einer Ladefläche (112) des Fahrzeuges (110) und eine von der Betätigungsvorrichtung (122) zu betätigende Spannvorrichtung (118) zum Spannen des Spanngurtes aufweist.

4. Baugruppe bestehend aus einer Sicherheitseinrichtung und einer Betätigungsvorrichtung nach Anspruch 1, **dadurch gekennzeichnet, daß** die Sicherheitseinrichtung ein Haltenetz (220) aufweist, das zwischen dem Laderaum des Fahrzeuges und dem Fahrgastraum angeordnet ist, wobei das Haltenetz durch die Betätigungsvorrichtung (222) aufgespannt werden kann, um den Laderaum vom Fahrgastraum zu trennen.

5. Baugruppe bestehend aus einer Sicherheitseinrichtung und einer Betätigungsvorrichtung nach Anspruch 1, **dadurch gekennzeichnet, daß** die Sicherheitseinrichtung einen Sicherheitsgurt (310) aufweist, der im angelegten Zustand an drei Befestigungspunkten (314, 316, 320) im Fahrzeug befestigt ist, wobei die Betätigungsvorrichtung (312) an zweien der Befestigungspunkte angreift, um den Sicherheitsgurt im Rückhaltefall zu straffen.

6. Baugruppe nach Anspruch 5, **dadurch gekennzeichnet, daß** die Sicherheitseinrichtung im Bereich des vorderen, oberen Randes einer Sitzfläche (318) eines Fahrzeugsitzes angeordnet ist.

7. Baugruppe bestehend aus einer Sicherheitseinrichtung und einer Betätigungsvorrichtung nach Anspruch 1, **dadurch gekennzeichnet, daß** die Sicherheitseinrichtung eine Fußschutzvorrichtung (410) zum Schutz der Füße (416) eines Fahrzeuginsassen aufweist, mit einer Fußablage (412), die mit der Betätigungsvorrichtung (414) gekoppelt ist.

8. Baugruppe bestehend aus einer Sicherheitseinrichtung und einer Betätigungsvorrichtung nach Anspruch 1, **dadurch gekennzeichnet, daß** die Sicherheitseinrichtung eine aufstellbare Motorhaube (502) aufweist, die mittels der Betätigungsvorrichtung (500) aus einer Ausgangsstellung in eine aufgestellte Stellung überführt werden kann.

9. Baugruppe bestehend aus einer Sicherheitseinrichtung und einer Betätigungsvorrichtung nach Anspruch 1, **dadurch gekennzeichnet, daß** die Sicherheitseinrichtung eine Stoßstange (600) ist, die mittels der Betätigungsvorrichtung (622) aus einer Ausgangsstellung in eine ausgefahrene Stellung überführt werden kann.
